# EUROPÄISCHE PATENTSCHRIFT

(11) **EP 1 762 328 B1**
(45) Veröffentlichungstag und Bekanntmachung des Hinweises auf die Patenterteilung: **30.04.2008**
(21) Anmeldenummer: 06090137.8
(22) Anmeldetag: 17.08.2006
(51) Int. Cl.: B23K 26/02, B23K 26/14

(54) **Taktil geführte Laserbearbeitungsoptik**
Tactile driven laser processing optic
Optique d'usinage laser guidé de manière tactile

(30) Priorität: 09.09.2005 DE 102005043616
(43) Veröffentlichungstag der Anmeldung: 14.03.2007
(73) Patentinhaber: Highyag Lasertechnologie GmbH, 14532 Stahnsdorf (DE)
(72) Erfinder: Niedrig, Roman, Dr., 12167 Berlin (DE); Schmidt, Ingo, 15738 Zeuthen (DE)
(74) Vertreter: Boeckh, Tobias

(56) Entgegenhaltungen:
- EP-A1- 0 284 921
- EP-A2- 1 097 775
- DE-A1- 4 415 035
- DE-A1- 19 615 069
- DE-U1- 8 713 471
- DE-U1- 20 103 411

## Beschreibung

Die Erfindung betrifft ein Verfahren und eine Vorrichtung zur exakten Positionierung eines Laserstrahls zur Fügestelle bei der Materialbearbeitung mittels eines Laserbearbeitungskopfes.

Bei der Lasermaterialbearbeitung ist wegen der geringen Ausdehnung des StrahlFokus die exakte Positionierung des Strahls zur Fügestelle besonders wichtig für einwandfreie Fügeergebnisse. Aufgrund der Werkstücktoleranzen ist deshalb die Genauigkeit der Bahnprogrammierung einer Roboter-geführten Laserbearbeitungsoptik oft nicht ausreichend.

Zur Überwindung dieses Problems gibt es mehrere Ansätze: Ein Ansatz ist die aktive Nachführung der Optik mittels eines Naht-Sensors. Dessen Daten können entweder zur Korrektur der Roboter-Position von der Roboter-Steuerung verarbeitet werden, oder die Laserbearbeitungsoptik selbst besitzt mindestens eine Zusatzachse, die dann von den Daten des Naht-Sensors angesteuert wird. Der Vorteil der letztgenannten Lösung besteht in der Unabhängigkeit von der Roboter-Steuerung und kann somit leichter in bestehende Systeme integriert werden. Beim Naht-Sensor selbst können wiederum unterschiedliche Konzepte zur Anwendung kommen. Es gibt beispielsweise optische Naht-Sensoren, die mittels Linien-Projektor und Abbildung auf eine Kamera die Stoßstelle erkennen und daraus die relative oder absolute Position der Naht berechnen können. Für eine hohe Genauigkeit und geringe Störanfälligkeit (Störungen z.B. durch Verschmutzung der Werkstücke oder der Kamera) muss allerdings ein sehr hoher optischer und elektronischer Aufwand getrieben werden. Dazu kommt noch der Aufwand der eventuell benötigten elektrisch angesteuerten Zusatzachsen in der Laserbearbeitungsoptik. Ein anderer Ansatz zielt darauf ab, durch einen in der Nahtfuge vorlaufenden mechanischen Abtaster die Fügelinie direkt zu ermitteln. Dieses Verfahren ist natürlich nur möglich, sofern eine entsprechende Nahtfuge vorhanden ist, also z.B. bei Kehlnähten, Bördeistoßnähten oder auch Überlapp-Verbindungen. Damit der mechanische Abtaster der Fügelinie folgen kann, muss der Abtaster die entsprechenden senkrecht zur Vorschubrichtung liegenden Bewegungsfreiheitsgrade aufweisen; außerdem muss der Abtaster mit einer gewissen Kraft in die Nahtfuge gedrückt werden, damit er nicht zu leicht aus der Fuge herausspringt. Nun muss noch der Laserstrahl mit der Bewegung des Abtasters gekoppelt werden, was in einfacher Weise z.B. dadurch gelingt, dass der Abtaster in der Form eines Pendel-Arms ausgeführt wird, durch dessen Drehachse der Strahl verläuft und von einem Spiegel in Richtung des Pendel-Arms umgelenkt wird. Die Auslenkung des Abtasters führt dann zur Drehung des Pendels um einen gewissen Winkel. Bei Kopplung des Spiegels mit der Drehung des Pendels folgt somit der Strahl der seitlichen Auslenkung des Abtasters. Da solche Bearbeitungsoptiken überwiegend eingesetzt werden, um den Einfluss von Toleranzen auszugleichen, sind die entsprechenden Korrekturbewegungen relativ klein. Insbesondere in Richtung der Laserstrahl-Achse sind die Lage-Änderungen der Fügelinie häufig kleiner als die Rayleigh-Länge des Laserstrahls, weswegen auf eine Nachführung der Fokus-Position in Richtung der Strahlachse dann verzichtet werden kann.

Zu Beginn des Bearbeitungsprozesses muss die Optik mit einem solchen mechanischen Abtaster an der Nahtfuge positioniert werden. Um dies zu ermöglichen, wird in solchen mit einer Zusatzachse versehenen Optik-Köpfen die Zusatzachse mit einem motorischen Antrieb sowie einem Positionsgeber ausgerüstet, um die Zusatzachse ansteuern zu können und den mechanischen Abtaster somit in eine gezielte Soll-Lage zu bringen, damit er dann in der Nahtfuge "einrasten" kann. Auch kann man mit dem Antrieb eine seitliche Kraft auf den Abtaster ausüben, was bei asymmetrischen Nahtfugen vorteilhaft ist.

Die Ausrüstung solcher Optik-Köpfe mit einem elektrischen Antrieb an der integrierten Zusatzachse ist jedoch wieder mit einem erheblichen Aufwand verbunden. Dieser Aufwand ist meist stark überdimensioniert, da mit den meisten Köpfen in industriellen Anwendungen über Monate oder gar Jahre hinweg immer die gleiche Anwendung gefahren wird, und somit z.B. eine beliebig programmierbare Soll-Lage des Abtasters gar nicht benötigt wird. Durch den elektrischen Antrieb wird der Optik-Kopf verschleißanfälliger, aber auch größer und schwerer, was sich negativ auf die dynamischen Eigenschaften bei der Prozessführung auswirken kann.

Beispielsweise beschreibt die DE 196 15 069 eine Vorrichtung zur Lasermaterialbearbeitung, bei der eine Nahtführung durch taktile Kantenverfolgung erzielt wird, indem mit einem Messtaster, d.h. einem mechanischen, mittels Feder vorgespanntem Taster, und einem mit dem Messtaster gekoppelten 2D-Wegaufnehmer dem Fügeprozeß vorlaufend die die Nahtkontur abgetastet wird. Dabei erfolgt die Nachführung des Laserfokus in Richtung der Strahlachse durch eine Linearbewegung und quer zur Strahlachse durch eine Verkippung der Optik jeweils mittels einem motorischen Antrieb.

Im Gegensatz dazu kommt die Vorrichtung, vorgeschlagen im deutschen Gebrauchsmuster G 87 13 471, ohne zusätzliche motorische Antriebe aus. Die Strahlnachführung erfolgt hier über schwenkbare Ablenkspiegel, deren Bewegung direkt mit dem mechanischen Taster gekoppelt ist, der die Nahtkontur detektiert.

Schließlich wird in der DE 44 15 035 eine Vorrichtung beschrieben, die ebenfalls ein Element vorsieht, welches im unmittelbaren Kontakt zum Werkstück steht und welches mit der Laserfokussiereinheit direkt gekoppelt ist, und wobei das KontaktElement zusammen mit der Laserfokussiereinheit in z- und in y-Richtung beweglich ist und federnd gelagert aufgenommen ist. Allerdings ist das Element, welches im Kontakt zum Werkstück steht, hier nicht zur Nahtverfolgung vorgesehen, sondern dient explizit als Niederhalter bzw. Andrückelement, um bei Überlappverbindungen ein spaltfreies Fügen zu ermöglichen.

Die bekannten Vorrichtungen haben den Nachteil, entweder sehr aufwändige Antriebe und Steuerungen zu benötigen oder in ihrem mechanisch bewegbaren Teil mit relativ hohen Massen behaftet zu sein, womit zwangsläufig hohe Andruckkräfte verbunden sind und die Dynamik des Systems sehr eingeschränkt ist. Weiterhin ist das Problem ungelöst, die Vorrichtung mit einfachen Mitteln mit einer definierten und reproduzierbaren, aber dennoch einstellbaren Ruhelage zu versehen.

Ausgehend von diesem Stand der Technik ist es Aufgabe der Erfindung, ein Verfahren zur Lasermaterialbearbeitung sowie einen Laserbearbeitungs-Kopf zu schaffen, womit eine exakte Positionierung des Strahls zur Fügestelle erreicht wird.

Erfindungsgemäß ist ein Verfahren mit taktiler Nahtführung vorgesehen, welches - im Vergleich mit bestehenden Systemen - auch wesentlich kostengünstiger, kompakter und robuster ist.

Gelöst wird diese Aufgabe durch die Merkmale der unabhängigen Ansprüche.

Es handelt sich mithin um ein Verfahren zur Positionierung eines Laserstrahls zur Fügestelle bei der Lasermaterialbearbeitung, bestehend aus einem Strahleingangsmodul 10, einem Rotationsmodul 20 mit in der Strahlachse liegender Drehdurchführung, einem Strahlumlenkmodul 30 mit Strahlfokussierung 32, wobei das Strahlumlenkmodul 30 über das Rotationsmodul 20 drehbar gelagert ist, sowie einem mittels einer Linearführung 41 am Strahlumlenkmodul 30 befestigten taktilen Tastarm 40, der mittels geeigneter Ansatzstücke 42 die durch die zu fügenden Werkstücke gebildete Fuge berührend abtastet. Erfindungsgemäß ist dabei vorgesehen, dass das Rotationsmodul 20 mindestens einen elastischen Energiespeicher 23, 24 zur exakten Positionierung des Laserstrahls zur Fügestelle aufweist, mit dessen Hilfe einerseits bei einer Auslenkung des Strahlumlenkmoduls 30 um einen beliebigen Winkel eine entsprechende Rückstellkraft auf das Strahlumlenkmodul 30 wirkt und andererseits bei Abwesenheit von äußeren Kräften auf den Tastarm 40 das Strahlumlenkmodul 30 immer in eine definierte Ruhelage geführt wird.

Erfindungsgemäß ist auch eine Vorrichtung zur Durchführung des Verfahrens vorgesehen, wobei das Rotationsmodul 20 mindestens einen elastischen Energiespeicher 23, 24 aufweist, der bei einer Auslenkung des Strahlumlenkmoduls um einen beliebigen Winkel eine der Auslenkung entgegenwirkende Rückstellkraft auf das Strahlumlenkmodul bewirkt, und bei Abwesenheit von äußeren Kräften das Strahlumlenkmodul immer in derselben, definierten Ruhelage hält.

Der erfindungsgemäße elastische Energiespeicher kann entweder durch eine Federspannung oder mittels Pneumatik-Zylinder dargestellt werden und wird unten näher beschrieben.

Das Ansatzstück bzw. der Abtaster, mit welchem die durch die zu fügenden Werkstücke gebildete Fuge berührend abgetastet wird, ist bevorzugt ein stab-, draht- oder nadelförmiges Element, oder eine Rolle, oder eine Kugel, oder ein V-förmiges Gleitstück. Bevorzugt ist auch, dass es sich bei dem Abtaster gleichsam um ein im wesentlichen zylindrisches Formstück handelt, welches auf der Tastseite aus einem kürzeren Teilstück mit kleinerem Durchmesser und auf der Halterungsseite aus einem längeren Teilstück mit größerem Durchmesser besteht und wobei der Übergang zwischen den zylindrischen Teilstücken kegelförmig ausgeführt ist. Der Abtaster wird ferner bevorzugt zur integrierten Prozessgaszufuhr verwendet und weist zu diesem Zweck beispielsweise eine Hohlbohrung auf.

In einer alternativen Ausführung befindet sich die Hohlbohrung zur Prozessgaszufuhr in der Halterung des abtastenden Ansatzstücks. Über Schraub- oder Klemmfassungen oder auch einen Bajonettverschluss ist das Ansatzstück am Tastarm leicht auswechselbar. Im Bereich der Halterung ist der Abtaster zylindrisch ausgebildet, die Halterung weist eine Bohrung zur Aufnahme des zylindrischen Teils des Abtasters auf und der Abtaster wird mittels eines Klemmbügels in der Bohrung fixiert. Ferner kann das abtastende Ansatzstück in allen drei Raumrichtungen relativ zum Laserfokus eingestellt oder justiert werden.

Zwischen dem die Fügelinie abtastenden Ansatzstück 42 und dem Laserstrahl 35 ist eine Drahtzufuhr-Einrichtung integriert, wobei die Drahtzufuhr-Düse der Drahtzufuhreinrichtung in das Ansatzstück 42 oder in die Halterung des Ansatzstücks 42 integriert sein kann. Die Halterung für die Drahtzufuhr-Düse und das abtastende Ansatzstück kann dabei isoliert am Tastarm befestigt sein, wobei das abtastende Ansatzstück gegenüber seiner Halterung auch elektrisch isoliert ist. Die elektrische Isolierung ist ggf. auf dem Ansatzstück oder nur im Bereich der Halterung aufgebracht.

Bevorzugt ist, dass der mit der Drahtzufuhr-Einrichtung dem Prozess zugeführte Zusatzdraht selbst als Fügelinie-Abtaster dient.

Ferner bevorzugt ist, dass die Fokussierlinse oder das Fokussierlinsensystem des Strahlumlenkmoduls in Strahlrichtung beweglich gelagert ist. Die verschiebbare Fokussierlinseneinheit ist dabei derart in das Strahlumlenkmodul eingebaut ist, dass die Fokussierlinseneinheit von dem Gehäuse des Strahlumlenkmoduls vollständig staub- und gasdicht umschlossen ist.

Eine besondere Ausgestaltung der Erfindung sieht vor, dass der taktile Tastarm einen Mitnehmer aufweist, der in die verschiebbare Fokussierlinseneinheit eingreift, wodurch die Fokusposition bei einer Änderung des Werkstückabstandes durch die Bewegung des taktilen Tastarms mitgeführt wird. Dabei wird der für den Mitnehmer notwendige Durchgriff durch das Gehäuse des Strahlumlenkmoduls mittels eines Faltenbalgs abgedichtet.

Ein so genanntes Retrofokus-System, bestehend aus einem aus mehreren Gruppen bestehendem Linsensystem ermöglicht die Fokussierung des Laserstrahls im Strahlumlenkmodul. Das Retrofokus-System ist dabei derart gestaltet, dass der Strahl zwischen den beiden Linsensystemen mit positiver Brechkraft kollimiert wird. Nur die letzte Linse des Retrofokus-Systems ist in Strahlrichtung beweglich gelagert und mit der Bewegung des Tastarms gekoppelt.

Weitere vorteilhafte Merkmale der Erfindung sind in den Unteransprüchen beschrieben. Die Erfindung wird anhand der Figuren näher beschrieben; es zeigt:
- Figur 1:: Schematische Darstellung der taktil geführten Laserbearbeitungsoptik;
- Figur 2:: Schematische Darstellung des Rotationsmoduls mit dem elastischen Energiespeicher, Sicht in Richtung der Drehachse. Ausführung mit auf Druck oder Zug beanspruchten Schraubenfedern, die direkt am Mitnehmer angreifen. A) Darstellung der Ruhe- bzw. Mittenposition. B) Darstellung einer ausgelenkten Position;
- Figur 3:: Schematische Darstellung des Rotationsmoduls mit dem elastischen Energiespeicher, Sicht in Richtung der Drehachse. Ausführung mit auf Druck beanspruchten Schraubenfedern, deren Federweg durch einen Anschlag in der Mittenposition begrenzt ist. A) Darstellung der Ruhe- bzw. Mittenposition. B) Darstellung einer ausgelenkten Position;
- Figur 4:: Darstellung einer Überlapp-Verbindung, bei der der Tastsensor seitlich am Oberblech geführt wird. Es wird deutlich, dass ein seitlicher Versatz zwischen Tastsensor und Strahlachse sinnvoll ist, was durch die Verstellmöglichkeit des Ansatzstückes oder des Tastarms erreicht wird. Sicht in Vorschubrichtung;
- Figur 5:: Schematische Darstellung des Strahlumlenkmoduls mit integriertem Retro-Fokus-System (Ausschnitt);
- Figur 6:: Darstellung einer möglichen Ausführung des unteren Bereichs des Tastarms mit einer Halterung für das abtastende Ansatzstück, wobei in die Halterung des Ansatzstücks gleichzeitig eine Drahtzufuhr-Düse integriert ist.

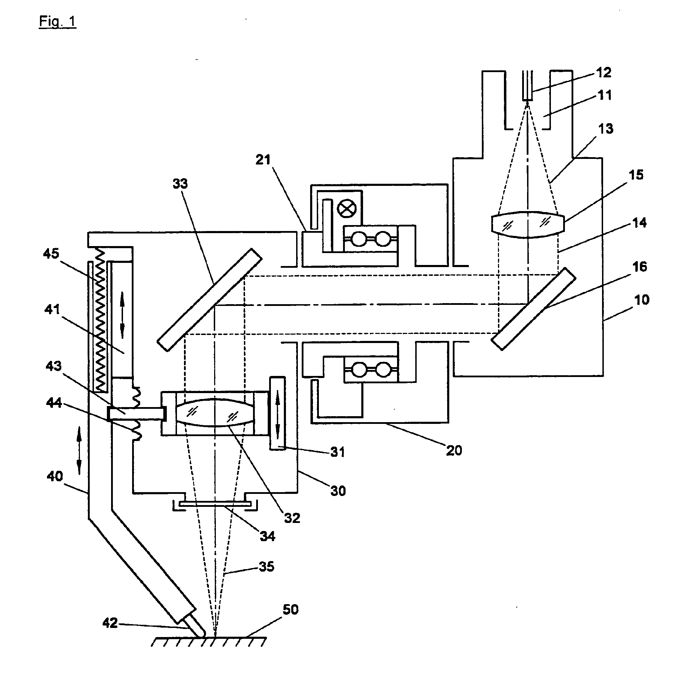

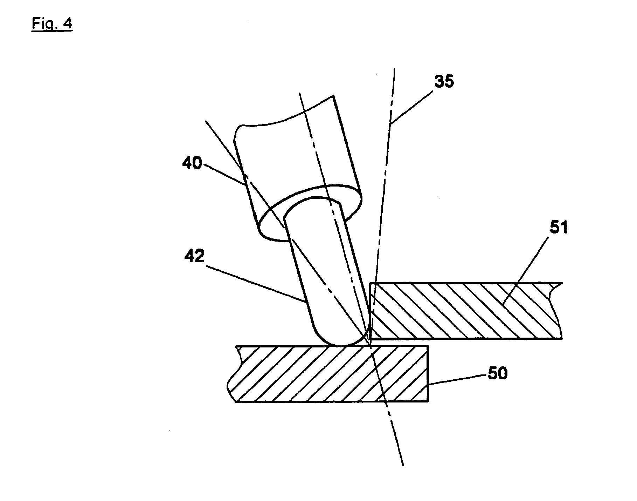

Erfindungsgemäß ist danach - wie aus der Figur 1 ersichtlich - eine Vorrichtung zur Lasermaterialbearbeitung vorgesehen, die aus einem Strahleingangsmodul 10, einem Rotationsmodul 20 mit in der Strahlachse liegender Drehdurchführung, einem Strahlumlenkmodul 30 mit Strahlfokussierung 32, wobei das Strahlumlenkmodul 30 über das Rotationsmodul 20 drehbar gelagert ist, sowie einem mittels einer Linearführung 41 am Strahlumlenkmodul 30 befestigten taktilen Tastarm 40 besteht, der mittels geeigneter Ansatzstücke 42 die durch die zu fügenden Werkstücke 50, 51 gebildete Fuge berührend abtastet (vgl. Fig. 4).

Das Strahleingangsmodul 10 weist einen Lichtleitkabel-Anschluss 11 sowie ein Linsensystem 15 zur Kollimation des aus dem Lichtleitkabel austretenden divergenten Laserstrahls 13 auf. Ferner besteht das Strahleingangsmodul aus einem Übergangsflansch, um den kollimierten Rohstrahl einer Laserquelle direkt anschließen zu können, und weist ein als Teleskop ausgeführtes Linsensystem 15 auf, wodurch der Durchmesser des Rohstrahls der Strahlquelle auf den freien Durchmesser der Drehdurchführung des Rotationsmoduls angepasst werden kann. Zur Strahlführung ist ein Umlenkspiegel 16 vorgesehen; der Befestigungsflansch des Strahleingangsmoduls zum Rotationsmodul hin ist dabei prinzipiell drehbar ausgeführt und ermöglicht eine Fixierung unter einem beliebigen Winkel, womit die Zuführung des Laserlichts flexibel gestaltet ist und eine Anpassung an die räumlichen Gegebenheiten der Laserbearbeitungsanlage zulässt.

Mit dem Fokussierlinsensystem 32 ist eine elektronische Kamera verbunden, um die Arbeitsprozesse besser dokumentieren zu können. Hierzu ist der Umlenkspiegel 33 zumindest für einen Teil des sichtbaren Spektrums durchlässig, und das von der Bearbeitungsstelle reflektierte Licht wird zurück durch die Fokussieroptik 32 abgebildet; es tritt durch den Umlenkspiegel 33 durch und wird dort mittels eines weiteren Linsensystems auf eine elektronische Kamera abgebildet. Um den Kamerastrahlengang herum ist koaxial eine Vorrichtung zur Beleuchtung des Fügebereichs angebracht ist, z.B. in Form eines Leuchtdioden-Ringes (nicht dargestellt).

Der Anschluss des Strahlumlenkmoduls 30 an das Rotationsmodul 20 ist als lösbare Wechsel-Schnittstelle ausgeführt, so dass verschiedene Strahlumlenkmodule, die sich z.B. in der Brennweite des Fokussiersystems 32 unterscheiden, angebaut werden können.

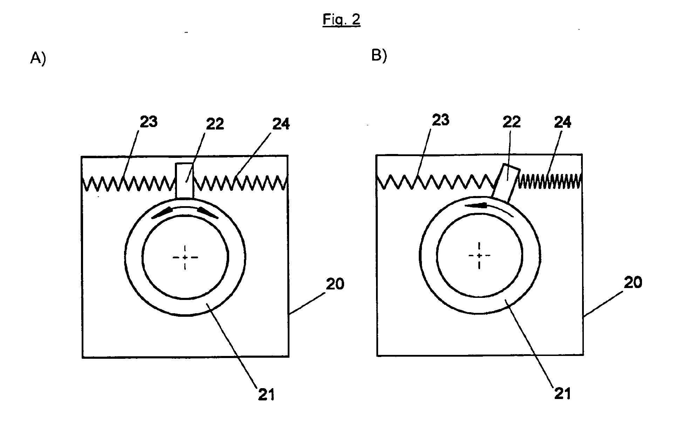

Wie in der Fig. 2 gezeigt, weist das Rotationsmodul 20 mindestens einen elastischen Energiespeicher 23, 24 auf, so dass bei einer Auslenkung des Strahlumlenkmoduls um einen beliebigen Winkel eine Rückstellkraft auf das Strahlumlenkmodul wirkt. Außerdem wird durch die Rückstellkraft bei Abwesenheit von äußeren Kräften auf den Tastarm das Strahlumlenkmodul immer in dieselbe definierte Ruhelage geführt (s. Fig. 2 A). Die elastischen Energiespeicher können im einfachsten Fall gegeneinander wirkende, auf Druck oder Zug beanspruchte Schraubenfedern sein (s. Fig. 2 B). Wenn am Strahlumlenkmodul keine äußere Kraft einwirkt - was ist dann der Fall ist, wenn der Tastarm das Werkstück oder die Nahtfuge nicht berührt - dann wird das Strahlumlenkmodul durch die Federn in eine definierte Ruhelage gezogen.

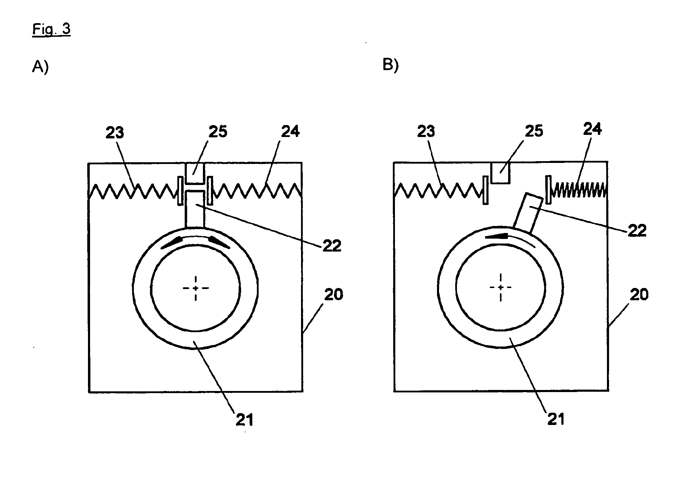

Wie in den Figuren 2 (A und B), sowie 3 (A und B) näher dargestellt, besteht der elastische Energiespeicher aus zwei Teilen (23 und 24), wobei die erste der beiden Teileinheiten des elastischen Energiespeichers in die eine der beiden Auslenkungsrichtungen wirkt und die andere Teileinheit in die andere Auslenkungsrichtung wirkt und wobei der Wirkungsbereich der beiden Teileinheiten jeweils an der Ruhelage des Strahlumlenkmoduls endet. Die Begrenzung des Wirkungsbereichs der beiden Teileinheiten des elastischen Energiespeichers erfolgt durch einen Anschlag 25 (s. Fig. 3A und B).

Der elastische Energiespeicher im Rotationsmodul 20 ist durch zwei gegeneinander wirkende auf Druck oder Zug beanspruchte Schraubenfedern 23, 24 ausgestaltet, die an einem Mitnehmer 22 angreifen, welcher die Kraftübertragung zum drehbar gelagerten Strahlumlenkmodul (30) übernimmt. Bevorzugt ist auch ein zusätzlicher Anschlag 25, der den Federweg der Druckfedern 23, 24 in der Mittenlage begrenzt, so dass bei einer Auslenkung aus der Ruhelage heraus jeweils nur eine der beiden Federn wirksam ist und somit bei einer Auslenkung sofort eine größere Anfangskraft wirksam ist (vgl. Fig. 3). Alternativ zu den Federn sind Pneumatik-Zylinder vorgesehen, deren Kolben an einem Mitnehmer 22 angreifen, wodurch die bei Auslenkung wirksamen Rückstellkräfte durch die in den Zylindern wirksamen Drücke eingestellt werden können.

Mittels eines einschiebbaren Stiftes kann die im Rotationsmodul 20 drehbar gelagerte Hohlwelle 21 blockiert werden, so dass das Strahlumlenkmodul 30 und der Tastarm 40 in ihrer Ruhe- bzw. Mittenlage mechanisch fixiert sind, wodurch Wartungs- und Einstellarbeiten erleichtert werden.

Die Position des Mitnehmers 22 ist auf dem Umfang der Hohlwelle 21 verstellbar, so dass die kraftfreie Ruhelage des Strahlumlenkmoduls beliebig wählbar ist. Ferner ist bevorzugt, dass der Mitnehmer 22, an dem die elastischen Energiespeicher angreifen, mittels einer Klemmvorrichtung an der im Rotationsmodul drehbar gelagerten Hohlwelle 21 befestigt ist, so dass durch Lösen der Klemmvorrichtung eine Verstellung der kraftfreien Ruhelage des Strahlumlenkmoduls 30 ermöglicht wird.

Die im elastischen Energiespeicher verwendeten Federn im Rotationsmodul können durch aufgewickelte Bandfedern dargestellt werden, wodurch wesentlich größere Auslenk-Winkel erreichbar sind.

Durch diese Maßnahmen wird es ermöglicht, die Vorrichtung mittels einer Führungsmaschine so zu positionieren, dass der Tastarm auf die Fügelinie zeigt. Dabei ist die Vorrichtung mittels einer am Rotationsmodul befindlichen Halterung an der Führungsmaschine oder der Roboterhand befestigt. Der Optik-Kopf wird anschließend etwas abgesenkt, so dass das Ansatzstück des Tastarms das Werkstück berührt, in die Nahtfuge einrastet und etwas einfedert. Dann beginnt der Roboter die programmierte Vorschubbahn abzufahren und der Laser wird eingeschaltet. Der Abtaster bzw. das Ansatzstück des Tastarms gleitet dann dem Laserstrahl vorlaufend in der Nahtfuge, und bei seitlichen Abweichungen der realen Fügelinie wird der Laserstrahl 35 über den Umlenkspiegel 33 seitlich mitbewegt, so dass der Strahl exakt über die Fügelinie geführt wird.

Wenn zur Nahtführung eine seitliche Andruckkraft des Tastsensors benötigt wird, z.B. um bei einer Überlappverbindung den Tastsensor seitlich gegen das Oberblech 51 zu drücken, dann wird dies in einfachster Weise dadurch erreicht, dass nach dem Einrasten in die Nahtfuge vor Beginn der Vorschubbewegung der Roboter eine kurze seitliche Bewegung in die gewünschte Andruckrichtung ausführt, wodurch der Tastarm ausgelenkt wird und die Federkräfte wirksam werden.

Damit auch Abweichungen der Fügelinie in Richtung der Strahlachse über einen größeren Bereich ausgeglichen werden können, ist es vorgesehen, dass das optische System 32 zur Fokussierung des Strahls, das kann im einfachsten Fall auch eine einzelne Linse sein, in Strahlrichtung beweglich gelagert ist, z.B. mittels einer Linearführung 31, und dass dieses Fokussiersystem 32 über einen Mitnehmer 43 durch den Tastarm 40 mitbewegt wird. Dadurch wird auch die Fokusposition in Strahlrichtung mit dem Tastsensor mitbewegt und verbleibt damit in der Werkstückebene.

Die beweglich gelagerte Fokussierlinse 32 ist vorzugsweise innen in das Strahlumlenkmodul 30 eingebaut, so dass sie von dessen Gehäuse vollständig dicht umschlossen ist. Gegenüber z.B. einem Linsentubus mit veränderlichem Auszug hat das den Vorteil, dass es keine Pumpeffekte gibt, was sonst zum Einsaugen von verschmutzter Umgebungsluft oder zu erhöhten Stellkräften wegen des Luftpolsters führen kann. Obwohl für diese Bauweise zwei Linearführungen erforderlich sind, eine für den Tastarm und eine für die Fokussierlinse, hat dies außerdem noch den Vorteil, dass der Tastarm und die Fokussierlinse bis auf den Mitnehmer für die Bewegungskopplung weitgehend mechanisch voneinander entkoppelt sind, so dass bei einem "Crash" des Tastarms mit dem Werkstück die empfindliche und teure Fokussieroptik gut geschützt ist.

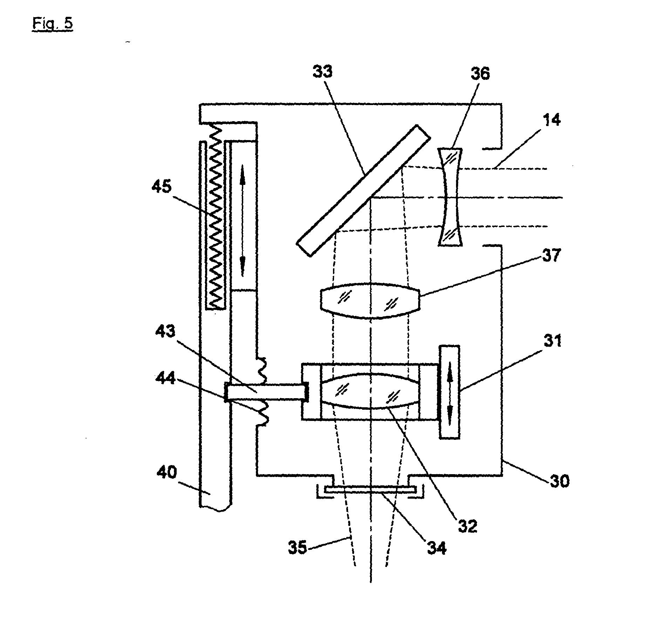

Eine besonders vorteilhafte Ausführung ist in der Fig. 5 dargestellt: Es hat sich als vorteilhaft erwiesen, wenn der Laserstrahl im Strahlumlenkmodul 30 zunächst vor dem Umlenkspiegel 33 durch eine Linse oder ein Linsensystem mit negativer Brechkraft 36 divergent aufgeweitet wird, anschließend hinter dem Umlenkspiegel 33 durch eine Linse oder ein Linsensystem mit positiver Brechkraft 37 kollimiert wird, und schließlich durch eine weitere Linse oder Linsensystem 32 fokussiert wird. Die drei Linsen bzw. Linsensysteme (36, 37, 32) bilden zusammen ein so genanntes Retro-Fokus-System. Damit kann bei kleinerer Brennweite ein größerer Bildabstand, d.h. Abstand zwischen Strahlfokus und Linsensystem, erzielt werden. Mit dem Einsatz dieses Systems kann daher ein besonders kleiner Strahlfokus erzielt werden oder ein größerer Arbeitsabstand. Außerdem kann hierbei der Durchmesser der Hohlwelle 21 der Drehdurchführung im Rotationsmodul klein gehalten werden, wodurch eine besonders kompakte Bauweise erzielt wird.

Die Vorrichtung eignet sich besonders gut für Laserquellen, die über eine Glasfaser geführt werden, das sind die meisten Festkörperlaser wie z.B. Nd:YAG-Laser, Diodenlaser, Disc-Laser oder Faserlaser. Aber auch der Anschluß von Lasern, deren Strahl über Spiegel geführt wird, wie z.B. CO₂-Laser, ist möglich. In diesem Fall wird man auf den Einsatz von Linsen weitgehend verzichten und stattdessen den Strahl z.B. mittels parabolischer Spiegel kollimieren und fokussieren, oder man verwendet optische Elemente z.B. aus Zinkselenid (ZnSe).

Die Figur 5 zeigt eine besondere Ausgestaltung der Erfindung, wonach der taktile Tastarm 40 einen Mitnehmer 43 aufweist, der in die verschiebbare Fokussierlinseneinheit 32 eingreift, wodurch die Fokusposition bei einer Änderung des Werkstückabstandes durch die Bewegung des taktilen Tastarms 40 mitgeführt wird. Dabei wird der für den Mitnehmer notwendige Durchgriff durch das Gehäuse des Strahlumlenkmoduls 30 mittels eines Faltenbalgs 44 abgedichtet.

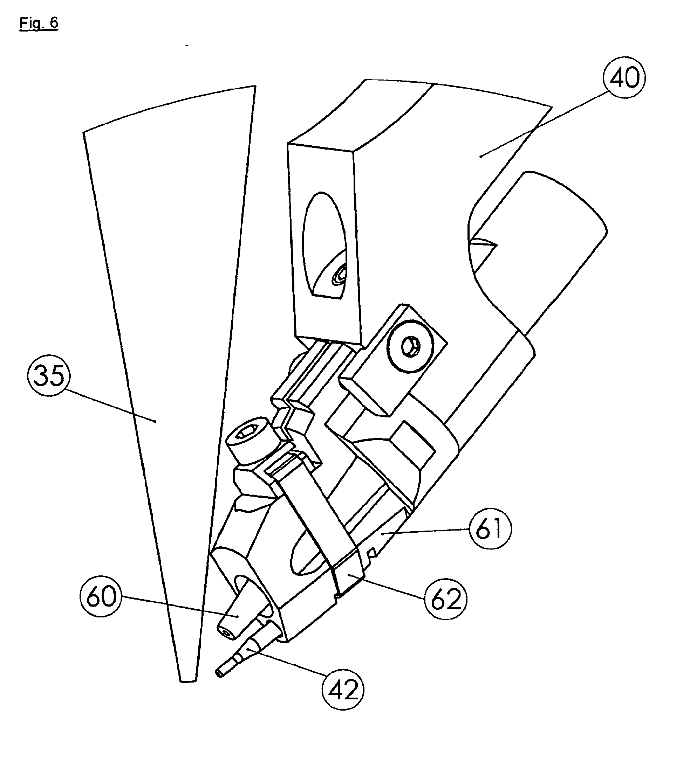

Figur 6 zeigt eine Darstellung einer möglichen Ausführung des unteren Bereichs des Tastarms 40 mit einer Halterung 61 für das abtastende Ansatzstück 42, wobei in die Halterung 61 des Ansatzstücks gleichzeitig eine Drahtzufuhr-Düse 60 integriert ist. Im Bereich der Halterung ist der Abtaster zylindrisch ausgebildet, die Halterung weist eine Bohrung zur Aufnahme des zylindrischen Teils des Abtasters auf und der Abtaster wird mittels eines Klemmbügels in der Bohrung fixiert.

### Bezugszeichenliste

- 10: Strahleingangsmodul
- 11: Lichtleitkabel-Aufnahme
- 12: Lichtleitfaser
- 13: divergenter Laserstrahl
- 14: kollimierter Laserstrahl
- 15: Kollimationslinse bzw. Kollimations-Linsensystem
- 16: Umlenkspiegel
- 20: Rotationsmodul
- 21: im Rotationsmodul drehbar gelagerte Hohlwelle
- 22: Mitnehmer
- 23: elastischer Energiespeicher, z.B. Druckfeder
- 24: elastischer Energiespeicher, z.B. Druckfeder
- 25: Anschlag
- 30: Strahlumlenkmodul
- 31: Linearführung
- 32: Fokussierlinse bzw. Fokussierlinsen-System
- 33: Umlenkspiegel
- 34: Schutzglas
- 35: fokussierter Laserstrahl
- 36: Linse oder Linsensystem mit negativer Brechkraft
- 37: Linse oder Linsensystem mit positiver Brechkraft
- 40: Tastarm
- 41: Linearführung
- 42: Ansatzstück bzw. Abtaster
- 43: Mitnehmer
- 44: Faltenbalg
- 45: Druckfeder
- 50: Werkstück
- 51: Werkstück (oberes Blech)
- 60: Drahtzufuhr-Düse
- 61: Halterung für Abtaster bzw. Ansatzstück
- 62: Klemmbügel

## Patentansprüche

1. Verfahren zur Positionierung eines Laserstrahls zur Fügestelle bei der Lasermaterialbearbeitung, bestehend aus einem Strahleingangsmodul (10), einem Rotationsmodul (20) mit in der Strahlachse liegender Drehdurchführung, einem Strahlumlenkmodul (30) mit Strahlfokussierung (32), wobei das Strahlumlenkmodul (30) über das Rotationsmodul (20) drehbar gelagert ist, sowie einem mittels einer Linearführung (41) am Strahlumlenkmodul (30) befestigten taktilen Tastarm (40), der mittels geeigneter Ansatzstücke (42) die durch die zu fügenden Werkstücke gebildete Fuge berührend abtastet, **dadurch gekennzeichnet, dass** das Rotationsmodul (20) mindestens einen elastischen Energiespeicher (23, 24) zur exakten Positionierung des Laserstrahls zur Fügestelle aufweist, mit dessen Hilfe einerseits bei einer Auslenkung des Strahlumlenkmoduls (30) um einen beliebigen Winkel eine Rückstellkraft auf das Strahlumlenkmodul (30) wirkt und andererseits bei Abwesenheit von äußeren Kräften auf den Tastarm (40) das Strahlumlenkmodul (30) immer in eine definierte Ruhelage geführt wird.

2. Verfahren nach Anspruch 1, **dadurch gekennzeichnet, dass** die Elastizität des elastischen Energiespeichers durch eine Federspannung oder mittels Pneumatik-Zylinder dargestellt wird.

3. Vorrichtung zur Positionierung eines Laserstrahls zur Fügestelle bei der Lasermaterialbearbeitung, bestehend aus einem Strahleingangsmodul (10), einem Rotationsmodul (20) mit in der Strahlachse liegender Drehdurchführung, einem Strahlumlenkmodul (30) mit Strahlfokussierung (32), wobei das Strahlumlenkmodul (30) über das Rotationsmodul (20) drehbar gelagert ist, sowie einem mittels einer Linearführung (41) am Strahlumlenkmodul (30) befestigten taktilen Tastarm (40), der mittels geeigneter Ansatzstücke (42) die durch die zu fügenden Werkstücke gebildete Fuge berührend abtastet, **gekennzeichnet dadurch, dass** das Rotationsmodul (20) mindestens einen elastischen Energiespeicher (23, 24) aufweist, der bei einer Auslenkung des Strahlumlenkmoduls um einen beliebigen Winkel eine der Auslenkung entgegenwirkende Rückstellkraft auf das Strahlumlenkmodul bewirkt, und bei Abwesenheit von äußeren Kräften das Strahlumlenkmodul immer in derselben, definierten Ruhelage hält.

4. Vorrichtung nach Anspruch 3, wobei der elastische Energiespeicher im Rotationsmodul (20) durch zwei gegeneinander wirkende auf Druck oder Zug beanspruchte Schraubenfedern 23, 24 oder aufgewickelte Bandfedern ausgestaltet ist, die an einem auf dem Umfang einer Hohlwelle 21 verstellbar positionierbaren Mitnehmer 22 angreifen, welcher die Kraftübertragung zum drehbar gelagerten Strahlumlenkmodul (30) übernimmt..

5. Vorrichtung nach Anspruch 3, wobei der elastische Energiespeicher durch Pneumatik-Zylinder ausgestaltet ist, deren Kolben an einem auf dem Umfang einer Hohlwelle 21 verstellbar positionierbaren Mitnehmer 22 angreifen.

6. Vorrichtung nach Anspruch 4 oder 5, wobei ein zusätzlicher Anschlag 25 den Federweg der Druckfedern 23, 24 oder der Pneumatik-Zylinder in der Mittenlage begrenzt.

7. Vorrichtung nach mindestens einem der vorhergehenden Ansprüche 3 bis 6, wobei mittels eines einschiebbaren Stiftes die im Rotationsmodul drehbar gelagerte Hohlwelle (21) blockierbar ist.

8. Vorrichtung nach mindestens einem der vorhergehenden Ansprüche 3 bis 7, wobei der Mitnehmer 22, an dem die elastischen Energiespeicher angreifen, mittels einer Klemmvorrichtung an der im Rotationsmodul drehbar gelagerten Hohlwelle 21 befestigt ist, so dass durch Lösen der Klemmvorrichtung eine Verstellung der kraftfreien Ruhelage des Strahlumlenkmoduls 30 gewährleistet ist.

9. Vorrichtung nach mindestens einem der vorhergehenden Ansprüche 3 bis 8, wobei das Ansatzstück 42, mit welchem die durch die zu fügenden Werkstücke gebildete Fuge berührend abgetastet wird, ein stab-, draht- oder nadelförmiges Element, oder eine Rolle, oder eine Kugel, oder ein V-förmiges Gleitstück ist.

10. Vorrichtung nach mindestens einem der vorhergehenden Ansprüche 3 bis 9, wobei das abtastende Ansatzstück 42 ein im wesentlichen zylindrisches Formstück ist, welches auf der Tastseite aus einem kürzeren Teilstück mit kleinerem Durchmesser und auf der Halterungsseite aus einem längeren Teilstück mit größerem Durchmesser besteht und wobei der Übergang zwischen den zylindrischen Teilstücken kegelförmig ausgestaltet ist.

11. Vorrichtung nach mindestens einem der vorhergehenden Ansprüche 9 oder 10, wobei das Ansatzstück ein Formstück mit integrierter Prozessgaszufuhr ist.

12. Vorrichtung nach wenigstens einem der Ansprüche 9 bis 11, wobei das Ansatzstück am Tastarm mittels Schraub- oder Klemmfassung oder einem Bajonettverschluss zur leichten Auswechselbarkeit ausgestaltet ist.

13. Vorrichtung nach Anspruch 12, wobei das Ansatzstück im Bereich der Halterung zylindrisch ausgebildet ist und die Halterung eine Bohrung zur Aufnahme des zylindrischen Teils des Ansatzstücks aufweist und wobei das Ansatzstück mittels eines Klemmbügels in der Bohrung fixiert wird.

14. Vorrichtung nach mindestens einem der vorhergehenden Ansprüche, wobei das Ansatzstück in allen drei Raumrichtungen relativ zum Laserfokus einstellbar oder justierbar ist.

15. Vorrichtung nach mindestens einem der vorhergehenden Ansprüche, wobei zwischen dem die Fügelinie abtastenden Ansatzstück 42 und dem Laserstrahl 35 eine Drahtzufuhr-Einrichtung integriert ist.

16. Vorrichtung nach Anspruch 15, wobei die Drahtzufuhr-Düse der Drahtzufuhreinrichtung in das Ansatzstück 42 integriert ist.

17. Vorrichtung nach Anspruch 15, wobei die Drahtzufuhr-Düse der Drahtzufuhreinrichtung in die Halterung des Ansatzstücks 42 integriert ist.

18. Vorrichtung nach den Ansprüchen 15 bis 17, wobei die Halterung für die Drahtzufuhr-Düse und das abtastende Ansatzstück isoliert am Tastarm befestigt sind.

19. Vorrichtung nach Anspruch 18, wobei das abtastende Ansatzstück gegenüber seiner Halterung elektrisch isoliert ist.

20. Vorrichtung nach Anspruch 19, wobei die elektrische Isolierung auf dem Ansatzstück oder nur im Bereich der Halterung aufgebracht ist.

21. Vorrichtung nach mindestens einem der vorhergehenden Ansprüche 3 bis 20, wobei der mit der Drahtzufuhr-Einrichtung dem Prozess zugeführte Zusatzdraht selbst als Fügelinie-Abtaster dient.

22. Vorrichtung nach mindestens einem der vorhergehenden Ansprüche 3 bis 21, wobei die Fokussierlinse oder das Fokussierlinsensystem 32 des Strahlumlenkmoduls in Strahlrichtung beweglich gelagert ist.

23. Vorrichtung nach Anspruch 22, wobei die verschiebbare Fokussierlinseneinheit (32) so in das Strahlumlenkmodul eingebaut ist, dass die Fokussierlinseneinheit von dem Gehäuse des Strahlumlenkmoduls (30) vollständig staub- und gasdicht umschlossen ist.

24. Vorrichtung nach mindestens einem der vorhergehenden Ansprüche 3 bis 23, wobei der taktile Tastarm (40) einen Mitnehmer (43) aufweist, der in die verschiebbare Fokussierlinseneinheit (32) eingreift, wodurch die Fokusposition bei einer Änderung des Werkstückabstandes durch die Bewegung des taktilen Tastarms (40) mitgeführt wird.

25. Vorrichtung nach Anspruch 24, wobei der für den Mitnehmer notwendige Durchgriff durch das Gehäuse des Strahlumlenkmoduls (30) mittels eines Faltenbalgs (44) gedichtet ist.

26. Vorrichtung nach mindestens einem der vorhergehenden Ansprüche 3 bis 25, wobei die Fokussierung des Laserstrahls im Strahlumlenkmodul 30 durch ein aus mehreren Gruppen (36, 37, 32) bestehendes Linsensystem erfolgt, die zusammen ein so genanntes Retrofokus-System bilden.

27. Vorrichtung nach Anspruch 26, wobei das Retrofokus-System so gestaltet ist, dass der Strahl zwischen den beiden Linsensystemen mit positiver Brechkraft (37, 32) kollimiert ist.

28. Vorrichtung nach Anspruch 26 oder 27, wobei nur die letzte Linse 32 des Retrofokus-Systems in Strahlrichtung beweglich gelagert ist und mit der Bewegung des Tastarms gekoppelt ist.

29. Vorrichtung nach mindestens einem der vorhergehenden Ansprüche 3 bis 28, wobei der Umlenkspiegel (33) zumindest für einen Teil des sichtbaren Spektrums durchlässig ist, und das von der Bearbeitungsstelle reflektierte Licht zurück durch die Fokussieroptik (32) abgebildet wird, durch den Umlenkspiegel (33) durchtritt und dort mittels eines weiteren Linsensystems auf eine elektronische Kamera abgebildet wird.

30. Vorrichtung nach Anspruch 29, wobei koaxial um den Kamerastrahlengang herum eine Vorrichtung zur Beleuchtung des Fügebereichs angebracht ist, z.B. in Form eines Leuchtdioden-Ringes.

31. Vorrichtung nach mindestens einem der vorhergehenden Ansprüche 3 bis 30, wobei der Anschluss des Strahlumlenkmoduls (30) an das Rotationsmodul (20) als lösbare Wechsel-Schnittstelle ausgeführt ist.

## Claims

1. A method of positioning a laser beam on a joint position in laser material processing, consisting of a beam entry module (10), a rotary module (20) with a rotary beam passage situated in the beam axis, a beam deflection module (30) with beam focusing (32), the beam deflection module (30) being rotatably mounted via the rotary module (20), and a tactile scanning arm (40) fixed on the beam deflection module (30) by means of a linear guide element (41), which, by means of suitable extensions (42), contactingly scans the joint formed by the workpieces to be joined, **characterized in that** the rotary module (20) has at least one elastic energy storage means (23, 24) for exact positioning of the laser beam on the joint position, which, on the one hand, acts to exert a restoring force on the beam deflection module (30) when the beam deflection module (30) is deflected by any angle, and, on the other hand, always moves the beam deflection module (30) into a well-defined rest position in the absence of external forces on the scanning arm (40).

2. The method according to claim 1, **characterized in that** the elasticity of the elastic energy storage means is established by spring tension or by means of a pneumatic cylinder.

3. A device for positioning a laser beam on a joint position in laser material processing, consisting of a beam entry module (10), a rotary module (20) with a rotary beam passage situated in the beam axis, a beam deflection module (30) with beam focusing (32), the beam deflection module (30) being rotatably mounted via the rotary module (20), and a tactile scanning arm (40) fixed on the beam deflection module (30) by means of a linear guide element (41), which, by means of suitable extensions (42), contactingly scans the joint formed by the workpieces to be joined, **characterized in that** the rotary module (20) has at least one elastic energy storage means (23, 24) which exerts a counteracting restoring force on the beam deflection module when the beam deflection module is deflected by any angle and always holds the beam deflection module in the same, well-defined rest position in the absence of external forces.

4. The device according to claim 3, wherein the elastic energy storage means in the rotary module (20) is designed in the form of two counteracting helical springs 23, 24 or wound-up flat springs loaded by pressure or tension and engaging on a driver element 22 which can be adjustably positioned on the circumference of a hollow shaft 21 and provides for the power transmission to the rotatably mounted beam deflection module (30).

5. The device according to claim 3, wherein the elastic energy storage means is designed in the form of pneumatic cylinders, the pistons of which engage on a driver element 22 which can be adjustably positioned on the circumference of a hollow shaft 21.

6. The device according to claim 4 or 5, wherein an additional abutment 25 restricts the spring path of the compression springs 23, 24 or pneumatic cylinders in a central position.

7. The device according to at least one of the preceding claims 3 to 6, wherein the hollow shaft (21) rotatably mounted in the rotary module can be blocked by means of a slide-in pin.

8. The device according to at least one of the preceding claims 3 to 7, wherein the driver element 22 on which the elastic energy storage means engage is secured by means of a clamping device on the hollow shaft 21 rotatably mounted in the rotary module so that adjusting the zero-force rest position of the beam deflection module 30 is ensured by releasing the clamping device.

9. The device according to at least one of the preceding claims 3 to 8, wherein the extension 42, by means of which the joint formed by the workpieces to be joined is contactingly scanned, is a bar-, wire- or needle-shaped element, or a roll, or a ball, or a V-shaped sliding element.

10. The device according to at least one of the preceding claims 3 to 9, wherein the scanning extension 42 is an essentially cylindrical molded part which consists of a shorter section with a smaller diameter on the scanning side and a longer section with larger diameter on the holder side, the transition between the cylindrical sections being designed in the form of a cone.

11. The device according to at least one of the preceding claims 9 or 10, wherein the extension is a molded part having an integrated process gas supply.

12. The device according to at least one of the preceding claims 9 to 11, wherein the extension on the scanning arm is provided with a screwed or clamp socket or a bayonet lock to allow easy replacement.

13. The device according to claim 12, wherein the extension in the region of the holder is of a cylindrical design and the holder has a drill hole to receive the cylindrical portion of the extension, the extension being fixed in the drill hole by means of a clamp shackle.

14. The device according to at least one of the preceding claims, wherein the extension can be set or adjusted relative to the laser focus in all three spatial directions.

15. The device according to at least one of the preceding claims, wherein a wire supply means is integrated between the extension 42 scanning the joint line and the laser beam 35.

16. The device according to claim 15, wherein the wire supply nozzle of the wire supply means is integrated in the extension 42.

17. The device according to claim 15, wherein the wire supply nozzle of the wire supply means is integrated in the holder of extension 42.

18. The device according to claims 15 to 17, wherein the holder for the wire supply nozzle and the scanning extension are mounted on the scanning arm in an isolated manner.

19. The device according to claim 18, wherein the scanning extension is electrically insulated with respect to the holder thereof.

20. The device according to claim 19, wherein the electric insulation is applied to the extension or only within the region of the holder.

21. The device according to at least one of the preceding claims 3 to 20, wherein the additional wire itself, supplied to the process with the wire supply means, is used as joint line scanner.

22. The device according to at least one of the preceding claims 3 to 21, wherein the focusing lens or the focusing lens system 32 of the beam deflection module is mounted movably in the beam direction.

23. The device according to claim 22, wherein the displaceable focusing lens unit (32) is installed in the beam deflection module in such a way that the focusing lens unit is surrounded by the casing of the beam deflection module (30) in an entirely dust- and gas-tight manner.

24. The device according to at least one of the preceding claims 3 to 23, wherein the tactile scanning arm (40) has a driver element (43) engaging the displaceable focusing lens unit (32), thereby entraining the focus position via the movement of the tactile scanning arm (40) when the workpiece spacing is changed.

25. The device according to claim 24, wherein the passage required for the driver element is sealed by the casing of the beam deflection module (30) by means of bellows (44).

26. The device according to at least one of the preceding claims 3 to 25, wherein focusing of the laser beam in the beam deflection module 30 is effected by means of a lens system consisting of a plurality of groups (36, 37, 32), together forming a so-called retrofocus system.

27. The device according to claim 26, wherein the retrofocus system is designed in such a way that the beam between the two lens systems is collimated with positive refractive power (37, 32).

28. The device according to claim 26 or 27, wherein only the last lens 32 of the retrofocus system is movably mounted in beam direction and coupled with the movement of the scanning arm.

29. The device according to at least one of the preceding claims 3 to 28, wherein the deflection mirror (33) is translucent to at least part of the visible spectrum, and the light reflected from the working area is imaged back through the focusing optics (32), passes through the deflection mirror (33) to be imaged there onto an electronic camera by means of an additional lens system.

30. The device according to claim 29, wherein the camera optical path is coaxially surrounded by a device used to illuminate the joint area, e.g. in the form of an LED ring.

31. The device according to at least one of the preceding claims 3 to 30, wherein the connection of the beam deflection module (30) to the rotary module (20) is designed in the form of a releasable interchangeable interface.

## Revendications

1. Procédé pour le positionnement d'un rayon laser par rapport au joint dans l'usinage laser de matériau, constitué d'un module d'entrée de rayon (10), d'un module de rotation (20) muni d'un passage tournant situé dans l'axe du rayon, d'un module de déviation de rayon (30) avec concentration du rayon (32), le module de déviation de rayon (30) étant logé de manière rotative par l'intermédiaire du module de rotation (20), ainsi que d'un bras palpeur (40) tactile fixé sur le module de déviation de rayon (30) au moyen d'un guidage linéaire (41), ce bras palpeur balayant par contact, au moyen d'embouts appropriés (42), le joint formé par les pièces à joindre, **caractérisé en ce que** le module de rotation (20) présente au moins un accumulateur d'énergie élastique (23, 24) pour le positionnement exact du rayon laser par rapport au joint, à l'aide duquel, d'une part, une force de rappel agit sur le module de déviation de rayon (30) lors d'une déviation du module de déviation de rayon (30) d'un angle quelconque et à l'aide duquel, d'autre part, le module de déviation de rayon (30) est toujours guidé dans une position de repos définie en cas d'absence de forces extérieures sur le bras palpeur (40).

2. Procédé selon la revendication 1, **caractérisé en ce que** l'élasticité de l'accumulateur d'énergie élastique est représentée par une tension de ressort ou au moyen de cylindres pneumatiques.

3. Dispositif pour le positionnement d'un rayon laser par rapport au joint dans l'usinage laser de matériau, constitué d'un module d'entrée de rayon (10), d'un module de rotation (20) muni d'un passage tournant situé dans l'axe du rayon, d'un module de déviation de rayon (30) avec concentration du rayon (32), le module de déviation de rayon (30) étant logé de manière rotative par l'intermédiaire du module de rotation (20), ainsi que d'un bras palpeur (40) tactile fixé sur le module de déviation de rayon (30) au moyen d'un guidage linéaire (41), ce bras palpeur balayant par contact, au moyen d'embouts appropriés (42), le joint formé par les pièces à joindre, **caractérisé en ce que** le module de rotation (20) présente au moins un accumulateur d'énergie élastique (23, 24) qui, lors d'une déviation du module de déviation de rayon d'un angle quelconque, cause une force de renvoi, agissant en sens opposé à la déviation, sur le module de déviation de rayon, et qui, en cas d'absence de forces extérieures, maintient le module de déviation de rayon toujours dans la même position de repos définie.

4. Dispositif selon la revendication 3, l'accumulateur d'énergie élastique dans le module de rotation (20) étant réalisé par deux ressorts cylindriques (23, 24), agissant en sens opposé et sollicités sur pression ou traction, ou par des ressorts à ruban enroulés qui ont prise sur un entraîneur 22 positionnable de manière réglable sur la circonférence d'un arbre creux 21, lequel entraîneur réceptionne la transmission d'énergie par rapport au module de déviation de rayon (30) logé de manière rotative.

5. Dispositif selon la revendication 3, l'accumulateur d'énergie élastique étant réalisé par des cylindres pneumatiques dont les pistons ont prise sur un entraîneur (22) positionnable de manière réglable sur la circonférence d'un arbre creux (21).

6. Dispositif selon la revendication 4 ou 5, une butée supplémentaire (25) limitant l'allongement de ressort des ressorts de compression (23, 24) ou des cylindres pneumatiques en position médiane.

7. Dispositif selon au moins l'une quelconque des revendications précédentes 3 à 6, l'arbre creux (21) logé de manière rotative dans le module de rotation étant blocable au moyen d'une tige insérable.

8. Dispositif selon au moins l'une quelconque des revendications précédentes 3 à 7, l'entraîneur (22), sur lequel les accumulateurs d'énergie élastiques ont prise, étant fixé sur l'arbre creux (21), logé de manière rotative sur le module de rotation, au moyen d'un dispositif de serrage, de sorte qu'un réglage de la position de repos, exempt de force, du module de déviation de rayon (30) est garanti par le desserrement du dispositif de serrage.

9. Dispositif selon au moins l'une quelconque des revendications précédentes 3 à 8, l'embout (42), au moyen duquel le joint formé par les pièces à joindre est balayé par contact, étant un élément en forme de barre, de fil métallique ou d'aiguille, ou un rouleau, ou une bille ou une pièce coulissante en forme de V.

10. Dispositif selon au moins l'une quelconque des revendications précédentes 3 à 9, l'embout (42) palpeur étant une pièce façonnée essentiellement cylindrique, laquelle, du côté palpeur, est constituée d'une pièce partielle plus courte ayant un plus petit diamètre et, du côté de l'attache, d'une pièce partielle plus longue ayant un diamètre plus grand, et le passage entre les pièces partielles cylindriques étant réalisé en forme de cône.

11. Dispositif selon au moins l'une quelconque des revendications précédentes 9 ou 10, l'embout étant une pièce façonnée avec alimentation intégrée de gaz de processus.

12. Dispositif selon au moins l'une quelconque des revendications précédentes 9 à 11, l'embout sur le bras palpeur étant exécuté au moyen d'une douille à vis ou d'une douille de serrage ou d'une fermeture à baïonnette pour une interchangeabilité facile.

13. Dispositif selon la revendication 12, l'embout étant exécuté de manière cylindrique dans la partie de l'attache et l'attache présentant un alésage pour le logement de la partie cylindrique de l'embout et l'embout étant fixé dans l'alésage au moyen d'un étrier de serrage.

14. Dispositif selon au moins l'une quelconque des revendications précédentes, l'embout étant réglable ou ajustable dans les trois directions spatiales par rapport au point focal du laser.

15. Dispositif selon au moins l'une quelconque des revendications précédentes, un dispositif d'alimentation de fil métallique étant intégré entre l'embout (42) palpant la ligne de jointure et le rayon laser (35).

16. Dispositif selon la revendication 15, la buse d'alimentation de fil métallique du dispositif d'alimentation de fil métallique étant intégrée dans l'embout (42).

17. Dispositif selon la revendication 15, la buse d'alimentation de fil métallique du dispositif d'alimentation de fil métallique étant intégrée dans l'attache de l'embout (42).

18. Dispositif selon les revendications 15 à 17, l'attache pour la buse d'alimentation de fil métallique et l'embout palpeur étant fixés sur le bras palpeur de manière isolée.

19. Dispositif selon la revendication 18, l'embout palpeur étant isolé électriquement par rapport à son attache.

20. Dispositif selon la revendication 19, l'isolation électrique étant appliquée sur l'embout ou seulement dans la partie de l'attache.

21. Dispositif selon au moins l'une quelconque des revendications précédentes 3 à 20, le fil métallique supplémentaire amené au processus au moyen du dispositif d'alimentation de fil métallique servant lui-même de palpeur de ligne de jointure.

22. Dispositif selon au moins l'une quelconque des revendications précédentes 3 à 21, la lentille de focalisation ou le système de lentille de focalisation (32) du module de déviation de rayon étant logé de manière mobile en direction du rayon.

23. Dispositif selon la revendication 22, l'unité de lentille de focalisation (32) coulissante étant installée dans le module de déviation de rayon de sorte que l'unité de lentille de focalisation est complètement entourée par le boîtier du module de déviation de rayon (30), de manière étanche à la poussière et aux gaz.

24. Dispositif selon au moins l'une quelconque des revendications précédentes 3 à 23, le bras palpeur tactile (40) présentant un entraîneur (43) qui a prise dans l'unité de lentille de focalisation (32) coulissante, sur quoi la position de focalisation, lors d'une modification de l'écart de la pièce usinée, est guidée par le mouvement du bras palpeur tactile (40).

25. Dispositif selon la revendication 24, le passage nécessaire pour l'entraîneur à travers le boîtier du module de déviation de rayon (30) étant étanchéifié au moyen d'un soufflet (44).

26. Dispositif selon au moins l'une quelconque des revendications précédentes 3 à 25, la focalisation du rayon laser dans le module de déviation de rayon 30 étant réalisée au moyen d'un système de lentilles constitué de plusieurs groupes (36, 37, 32), qui forment ensemble un dit système rétrofocus.

27. Dispositif selon la revendication 26, le système rétrofocus étant conçu de telle manière que le rayon est collimaté entre les deux systèmes de lentilles avec une puissance de lentille positive (37, 32).

28. Dispositif selon la revendication 26 ou 27, seulement la dernière lentille (32) du système rétrofocus étant logée de manière mobile en direction du rayon et étant couplée au mouvement du bras palpeur.

29. Dispositif selon au moins l'une quelconque des revendications précédentes 3 à 28, le miroir de déviation (33) étant perméable au moins pour une partie du spectre visible, et la lumière réfléchie par le point d'usinage étant représentée en retour par l'optique de focalisation (32), traversant le miroir de déviation (33) et y étant représentée sur une caméra électronique au moyen d'un autre système de lentilles.

30. Dispositif selon la revendication 29, un dispositif d'éclairage de la zone de joint étant installé coaxialement autour de la trajectoire du faisceau de la caméra, par ex. sous forme d'un anneau de diodes électroluminescentes.

31. Dispositif selon au moins l'une quelconque des revendications précédentes 3 à 30, le raccordement du module de déviation de rayon (30) au module de rotation (20) étant exécuté comme interface de changement amovible.
